# EUROPEAN PATENT SPECIFICATION

(11) **EP 3 211 722 B1**
(45) Date of publication and mention of the grant of the patent: **22.04.2020**
(21) Application number: 16156972.8
(22) Date of filing: 23.02.2016
(51) Int. Cl.: H01R 13/04, H01R 13/52, H01R 13/03, H01R 13/11, H01R 13/187

(54) **CONTACT STUD AND CONTACT ASSEMBLY IN PARTICULAR FOR CAR TECHNOLOGY**
KONTAKTBOLZEN UND KONTAKTANORDNUNG INSBESONDERE FÜR AUTOTECHNOLOGIE
PLOT DE CONTACT ET ENSEMBLE DE CONTACT, EN PARTICULIER POUR UNE TECHNOLOGIE AUTOMOBILE

(43) Date of publication of application: 30.08.2017
(73) Proprietor: TE Connectivity Germany GmbH, 64625 Bensheim (DE); Tyco Electronics UK Limited, Swindon, Wiltshire SN3 5HH (GB)
(72) Inventor: Ostermann, Rüdiger, 64468 Rimbach (DE); Ripper, Hartmut, 64287 Darmstadt (DE); Trajkov, Mile, 60431 Frankfurt (DE); Marsh, John, London, W7 2DA (GB)
(74) Representative: Grünecker Patent- und Rechtsanwälte PartG mbB

(56) References cited:
- EP-A2- 0 265 766
- WO-A1-2015/029731
- JP-A- 2006 339 167
- JP-A- 2013 187 170
- JP-A- 2014 154 377
- US-A1- 2011 021 049

## Description

The invention relates to a contact stud, and a contact assembly in particular for car technology. For electrical installations in a car, the car body is usually used as a ground. Currently, the contacting to this ground is done with a threaded connection. A threaded bolt is attached to the car body and a nut is screwed onto the bolt to protect a part of the bolt from being coated with an insulating coating like paint or lacquer in a subsequent step. Later on, the nut is removed, a grounding cable is attached and the nut is again screwed onto the bolt. However, this procedure is time-consuming.

From EP 0 265 766 A2, a rod for a connector plug is known which has a resistive coating at a front end. JP 2006339167 discloses the use of discharge contact pads in a contact system in order to avoid the occurrence of arcing during contacting.

The objective of the invention is to provide a solution that allows a more time efficient manufacturing.

This objective is achieved by a contact stud for providing a connection, in particular a ground connection to a car body, comprising a protection element, a connection section adapted to be inserted into a terminal along an insertion direction and a base section adapted to be mounted on a car body wherein an electrically conductive first section of the connection section is protected from being coated by a coating by the protection element and the connection section outside the electrically conductive first section is coated with an insulator, wherein the protection element is shiftable along the insertion direction.

A contact assembly for car technology comprises a contact stud according to the invention and a terminal in particular for car technology adapted to receive a contact stud according to the invention in an insertion direction and comprises a receptacle with an opening that is open in the insertion direction and a contact spring in the receptacle, the contact spring comprising a contact surface protruding inwardly into the receptacle.

The protection element protects the first section of the connection section from being coated. Once the coating is applied, the first section can be made accessible so that the contact surface of the terminal can access an uncoated and thus electrically conductive region.

A further advantage of the invention is that the inventive solution can be applied when aluminum is used instead of the currently predominately used iron based metal sheets for a car body. The problem with aluminum is that it is much softer than iron based metal sheets so that threads are often damaged during the screwing process. The inventive solution does not need threads for making a connection.

The solution according to the invention can further be improved by the following further developments and advantageous embodiments which are independent of each other and can be combined as desired.

The protection element is shiftable. It can be adapted to be shifted by the terminal. In particular, such a shifting can take place automatically when the contact stud is inserted into the terminal. The shifting takes place along the insertion direction. Thus, the manufacturing process is simplified. The protection element can in particular be a ring that is located around the contact stud. When the ring is shifted, it cannot be lost due to the fact that is a closed element.

In an advantageous embodiment, the first section is located on a part of the contact stud that has a constant cross section along the insertion direction and the protection element is a ring that is adapted to the cross section of the part and the ring is movable along the part. This allows an easy shifting. When the ring is shifted, it does not get loose due to the constant cross section. Rather, a defined position is taken by the ring. The ring does not damage the coating and a simple shifting with little force is possible. As an alternative, the ring can have an elastically deflectable part like a spring.

The contact stud can comprise a projection projecting perpendicular to the insertion direction. This can allow a safe connection to the terminal for example by creating a latching connection or a positive fit. Such a projection can also help to seal a contact area.

The projection can run around a circumference of the contact stud. It can in particular be a rim. This allows a good force distribution around the entire circumference.

The projection can project at most as much as the first section in a direction perpendicular to the insertion direction. With such a configuration, an easy insertion of the contact stud into the terminal is possible, in particular if the projection is located further to a front section of the contact stud than the first section. Between the first section and the projection, an intermediate section can be located. This intermediate section can in particular be a channel so that the projection does not project further away from the rest of the contact stud than the first section.

In an advantageous embodiment, the first section is cylindrical around the insertion direction. Thus, an easy contacting in all rotation positions is possible. In addition, the contact stud can rotate in the terminal in an assembled state.

The contact stud can have a rotational symmetry so that the mounting of the contact stud to the car body and/or the mounting of the terminal in the contact stud is easy and no attention has to be paid to the rotational position.

The contact stud can comprise a detection projection protruding at the end of the connection section along the insertion direction. Such a detection projection can serve to detect the presence of the contact stud for example by a sensor or by a visual inspection. It can be adapted for contacting an external detection element.

The contact stud can be adapted to be welded to the car body. It can comprise a welding section.

The contact stud can be adapted to be attached to the car body by a rivet-like connection. It can comprise a section that is adapted to be deformed and to receive a metal sheet of the car body between two opposing parts.

The contact stud and the terminal can be adapted to and be used to make a ground connection. In an alternative, the contact stud and the terminal can be adapted to and be used to make a non-ground connection, for example a power supply connection that supplies voltage to a system.

A flange can be located on the contact stud to allow attachment of the contact stud to a metal sheet of the car body with a high contact area and with a defined direction, in particular a direction perpendicular to the metal sheet. The flange can also serve to contact a counter flange on the terminal for safe positioning of the two relative to each other.

The terminal can comprise more than one contact surface, the contact surfaces being located cylindrically around the insertion direction. Thus, an easy contacting in all rotational positions is possible and the mounting is simplified. Of course, a single contact surface can also be cylindrical to achieve this advantage. However, if more than one contact surface is present, a deflection of the contact surfaces with a lower spring force can be possible.

The terminal can comprise a projection element that protrudes into the receptacle and that is located between the opening and the contact spring. This projection element can serve to move or shift the protection element of the contact stud, in particular in an automated manner. The projection element can either be integral with the receptacle or be an element that is inserted into the receptacle and held therein. The projection element can for example be a metal ring that is located in a cylindrical channel in the receptacle. The protection element can also be adapted to center the contact stud in the terminal later on and/or to provide a sealing between the contact stud and the terminal.

Preferably, the terminal can comprise at least one seal for sealing a contact space in which the contact surface is located. Thus, the contact space is protected for example against ingress of water and/or dirt. The seal can be adapted to provide an additional function. For example, a seal can be adapted to seal and at the same time provide a fixing of the terminal to the contact stud e.g. by a form fit between one or more projections on the contact stud and/or the terminal.

The terminal can be adapted to be crimped to a wire of a cable, in particular a ground cable. To this end, the terminal can comprise a crimping section that is adapted to be crimped to a wire of a cable. Of course other methods of attaching a cable are also possible.

The terminal can comprise a flange at the opening for contacting a counter flange on the terminal or the car body. Such a flange can allow a stable positioning and/or provide a sealing function.

The receptacle can be cylindrical to allow an easy mounting in any rotational position and/or a rotation of the contact stud in the terminal.

The terminal can comprise a second opening opposite the first opening that is adapted for detecting the presence of the contact stud in the receptacle. The detection can be e.g. by a detector or a sensor or simply by a visual inspection. The detector can be for example a mechanical detector or an optical detector.

In a contact assembly, the first section of the contact stud and the contact section of the terminal can be at the same height along the insertion direction in a fully mated position of the contact stud and the terminal.

A sealing ring of the terminal can secure the contact stud in the terminal in a fully mated position. The sealing ring thus provides a double function of sealing and securing. The securing can be similar to a positive fit and the sealing ring can be elastic.

The contact assembly can comprise a locking member for locking the contact stud to the terminal at least in a fully mated position. In the fully mated position, the locking member can create a positive fit between the contact stud and the terminal. The locking element can latch the terminal to the contact stud. When moving the terminal and the contact stud into the fully mated position, it can be necessary to apply a force, in particular a force for at least temporarily deforming the locking member. The locking member can therefore comprise an elastic material. In the fully mated position, the locking member can be less compressed than in an intermediate position that is necessary for moving into the fully mated position. When moving the terminal and the contact stud out of the fully mated position, it can again be necessary to apply a force, in particular a force for at least temporarily deforming the locking member.

The locking member can additionally seal a contact area to achieve a double function. The locking member can, for instance, be a sealing ring.

At least one sealing ring of the terminal can center or position the contact stud in the terminal so that a double function is again provided.

The contact stud and the terminal can be rotatable to each other so that an easy mounting and/or a rotation of the two after mounting is possible.

The contact stud and/or the terminal can have standardized interfaces and shapes for being usable with a variety of different terminals or contact studs, respectively.

In the following, the invention will be described in an exemplary manner with reference to the figures. The embodiments and advantageous developments are independent of each other and can be combined freely.

In the figures:
- Fig. 1: shows a schematic perspective view of the contact stud with the protection element on the first section;
- Fig. 2: shows a schematic perspective view of the contact stud with the protection element shifted along the insertion direction;
- Fig. 3: shows a schematic perspective view of a terminal in an exploded view;
- Fig. 4: shows a schematic perspective sectional view of a terminal;
- Fig. 5: shows a schematic perspective view of the terminal together with the contact stud in an exploded view;
- Fig. 6: shows a schematic perspective partially sectional view of the terminal together with the contact stud;
- Fig. 7: shows a schematic partially sectional view of a first step of mounting the contact stud to the terminal;
- Fig. 8: shows a detail of the step shown in Fig. 7 in a perspective partially sectional view;
- Fig. 9: shows a schematic partially sectional view of a second step of mounting the contact stud to the terminal;
- Fig. 10: shows a detail of the step shown in Fig. 9 in a perspective partially sectional view;
- Fig. 11: shows a schematic partially sectional view of a third step of mounting the contact stud to the terminal;
- Figs. 12A and 12B: show two side views of the terminal;
- Figs. 13A and 13B: show two side views of the contact stud;
- Fig. 14: shows an alternative embodiment of a terminal in a schematic perspective view.

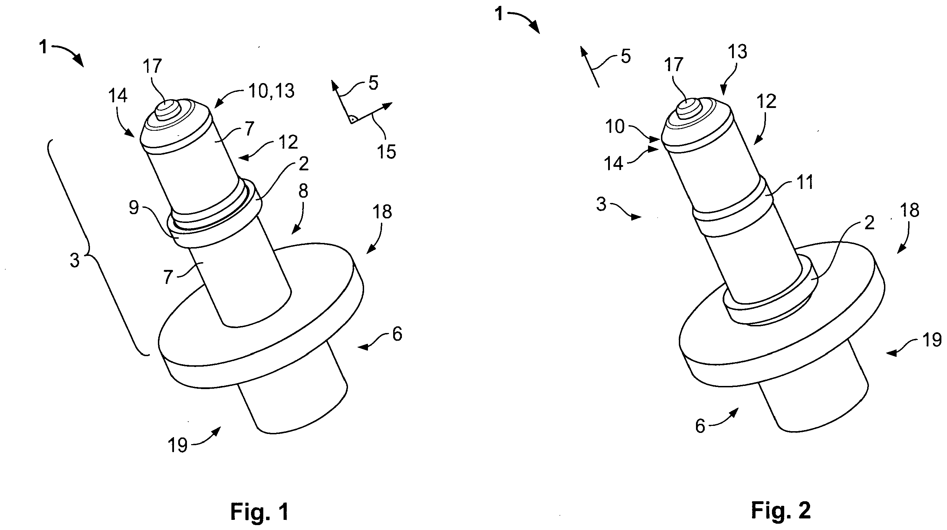

In Figs. 1 and 2, a contact stud 1 according to the invention is shown. In this example, it serves to provide a ground connection to a car body C which is not shown here for the sake of simplicity. In other applications, it can serve to provide a power connection or a signal connection. The car body C is attached to a base section 6 of the contact stud 1. To this end, the contact stud 1 comprises a deformation section 19 that can be deformed in a rivet-like manner.

A flange 18 serves to maintain the contact stud 1 in an upright position 90° perpendicular to a metal sheet of the car body C.

Alternatively to the mounting by a deformation shown in this embodiment other possibilities of mounting the contact stud 1 to the car body are possible. For example, the contact stud 1 could be welded to the car body C.

The contact stud 1 further comprises a connection section 3 that is adapted to be inserted into a ground terminal 20 along an insertion direction 5. In an initial position shown in Fig. 1A, the first section 11 of the contact section 3 is protected from being coated by a coating. Once the contact stud 1 is attached to the car body C, the entire car body C including the contact stud 1 is coated with a coating 7. The protection element 2 however protects the first section 11 from being coated so that at a later stage, shown for example in Fig. 2, when the protection element 2 is shifted away from the initial position, an electrical contacting is possible at the first section 11. Outside the first section 11 the contact stud 1 is coated with an insulating coating 7.

The protection element 2 is shiftable along the insertion direction 5. It is automatically shifted away from the first section 11 when the contact stud 1 is inserted into the terminal 20. The details of this process are described below.

The first section 11 is located on a part 8 of the contact stud 1 that has a constant cross section along the insertion direction 5. The protection element 2 is embodied as a ring 9 that is adapted to the cross section of the part 8. The embodiment as a ring 9 has the advantage that the protection element 2 does not get lost when it is shifted away from the initial position. Thus, the protection element 2 cannot lead to errors in other parts. Due to the constant cross section, the ring 9 also does not move freely but is rather held so that noises are avoided.

The ring 9 can be moved and shifted without undue force. Further, the ring 9 does not damage the coating 7 on the part 8.

The contact stud 1 further comprises a projection 10 that serves to latch the contact stud 1 in the terminal 20 in a final position, the details of which are described below.

The contact stud 1 is rotationally symmetric around an axis that is parallel to the insertion direction 5. Due to this, the mounting can be simplified as the rotational position of the contact stud 1 does no longer matter. Further, the contact stud 1 can rotate in the terminal 20 once it is assembled.

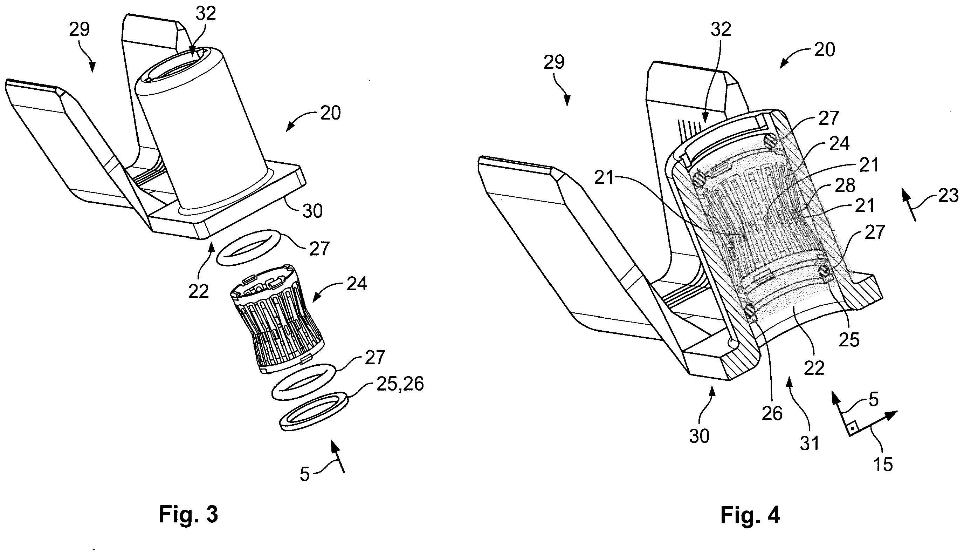

In Figs. 3 and 4, the terminal 20 is shown in more detail. The terminal 20 comprises a crimping section 29 that is adapted to be crimped to a ground cable. Of course, other possibilities of attaching a cable like welding or soldering are possible.

The terminal comprises a receptacle 22 that is adapted for receiving the contact stud 1. The receptacle 22 has an opening 31 through which the contact stud 1 enters the terminal 20. In the receptacle 22 a contact spring 24 is located. The contact spring 24 has several contact surfaces 21 protruding inwardly into the receptacle 22 for making an electrical connection to the first section 11 of the contact stud 1.

The contact surfaces 21 are located cylindrically around an axis parallel to the insertion direction 5 so that the rotational mounting position can be arbitrary and that a rotation of the terminal 20 to the contact stud 1 is possible. The receptacle 22 is generally cylindrical at the inside and the outside.

A projection element 25 in the form of a metal ring 26 projects into the receptacle 22. The projection element 25 serves to shift the protection element 2 of the contact stud 1 away from the first section 11. The projection element 25 is located in a channel 33 or a recess 34 in an inner wall of the receptacle 22.

The terminal 20 comprises a flange 30 that protrudes perpendicular to the insertion direction 5 and ensures a stable mounting.

Further, the terminal 20 comprises two seals 27 in the form of sealing rings that seal the contact space 28 once the contact stud 1 is fully mounted to the terminal 20.

A second opening 32 that is located opposite the first opening 31 serves to inspect the position of the contact stud 1 in the terminal 20. For example, a sensor could be used for detecting the correct positioning.

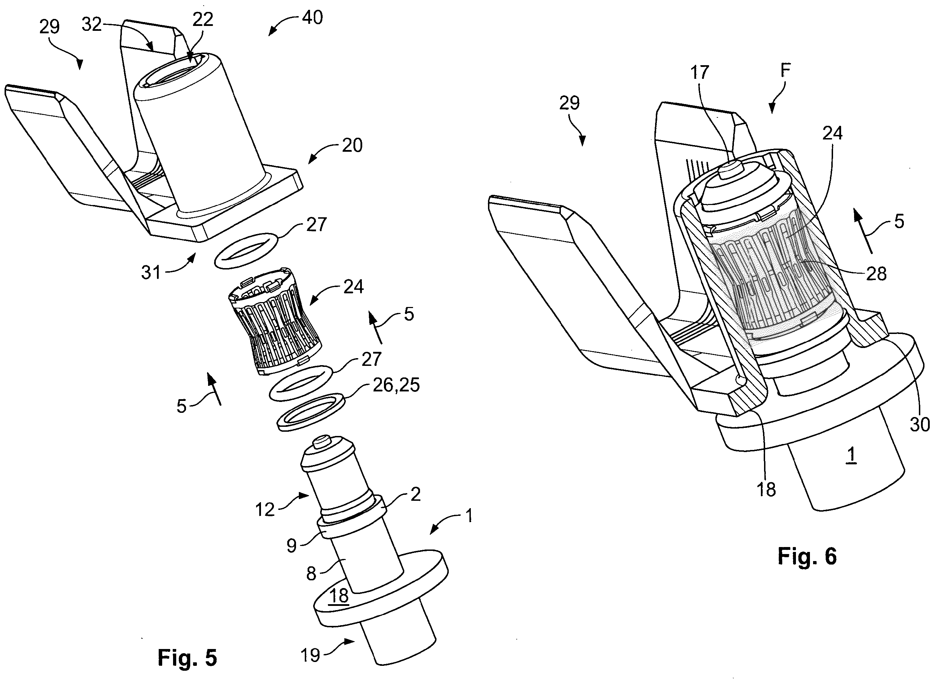

In Figs. 5 and 6, the contact stud 1 and the terminal 20 are shown together. In Fig. 6, the contact stud 1 and the terminal 20 are fully mated. An electrical contact between the contact stud 1 and the terminal 20 is achieved via the contact spring 24 which contacts the first section 11 of the contact stud 1 via the contact surfaces 21.

The flanges 18 and 30 of the contact stud 1 and the terminal 20 abut each other and thereby provide a secure mechanical position.

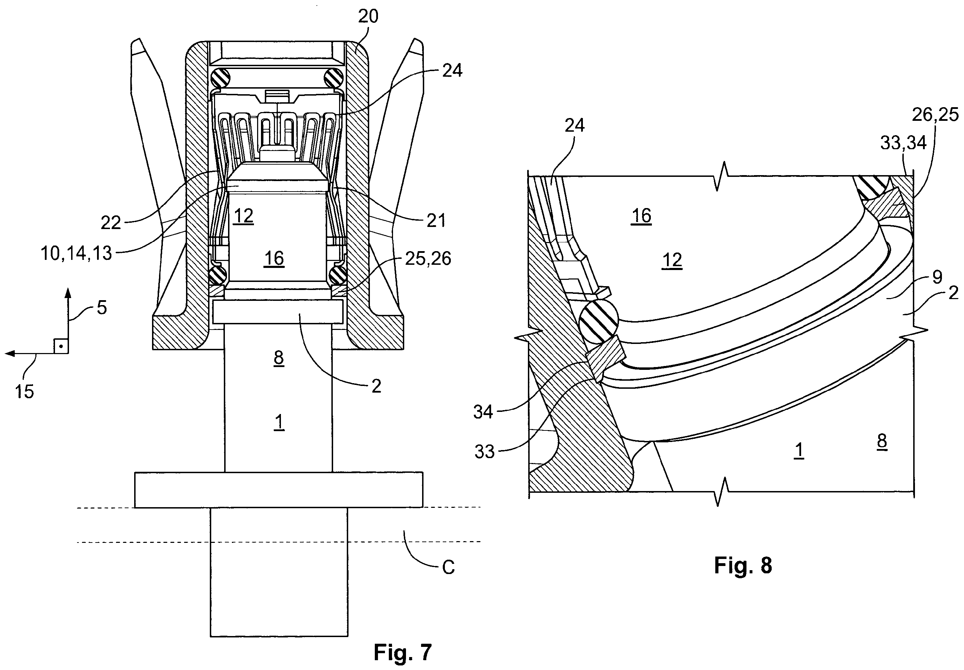

In Figs. 7 to 11, three steps of the mounting of the contact stud 1 in the terminal 20 are shown.

In Fig. 7 and 8, the contact stud 1 has been partially inserted into the receptacle 22. The projection 10 is in mechanical contact with the contact surfaces 21. However, no electrical connection between the two exists, as the projection 10 is coated with an insulating coating like a paint or a lacquer that was applied on the car body C and the attached contact stud 1. In Fig. 7, the car body C is shown in broken lines. This shows only the position of the car body C. The deformation of the deformation section 19 is not shown.

The protection element 2 is still located over the first section 11.

Due to the fact that the projection 10 does not protrude further in a direction 15 perpendicular to the insertion direction 5 from the rest of the contact stud 1 than the part 8 on which the first section 11 is located, the insertion of the contact stud 1 to the contact spring 21 can be done with little effort and without damaging the contact spring 21. The intermediate section 12 which is embodied as a channel 16 allows that the projection 10 does not protrude further than the part 8.

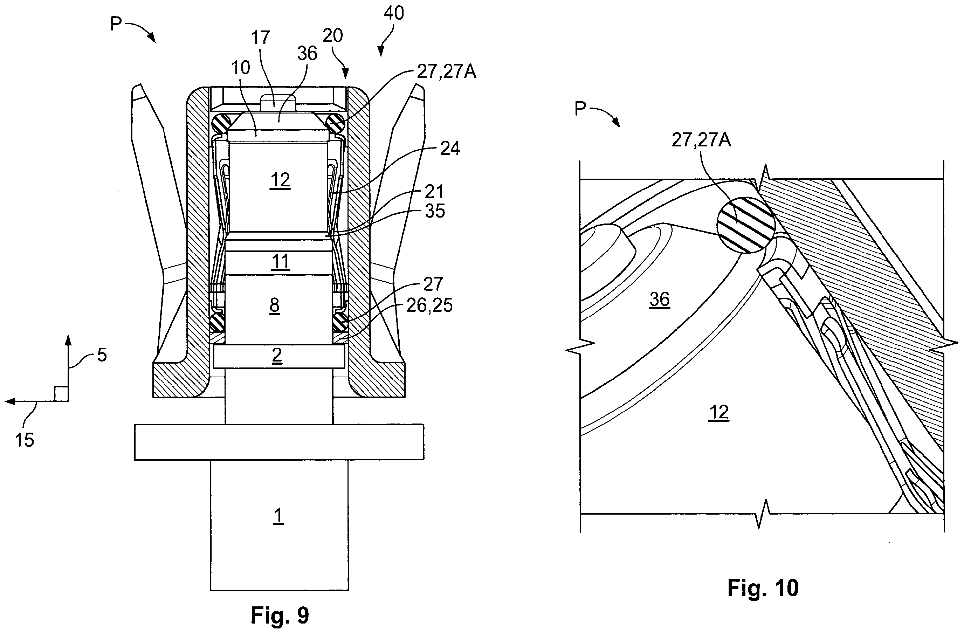

In Figs. 9 and 10, the contact stud 1 is inserted further into the terminal 20. The protection element 2 has been shifted against the insertion direction 5 from its initial position above the first section 11 to a position further downwards. This has been done by the projection element 25 which is in direct contact with the protection element 2. An upper seal 27A has not yet been moved over the projection 10. It is rather located at a positioning section 36 that is partially conical and serves to position the contact stud 1 in the terminal 20 during the insertion process. The terminal 20 is only loosely connected to the contact stud 1.

The contact surfaces 21 are located at a transition section 35 located between the part 8 and the intermediate section 12. The transition section 35 is partially conical.

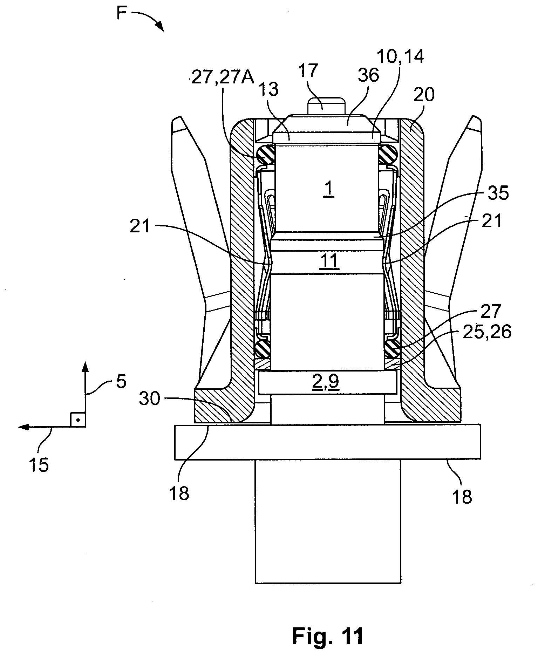

In Figures 9 and 10, a pre-locking position P is depicted. In order to move the terminal 20 and the contact stud 1 into the fully mated position F of fig. 11, it is necessary to apply a force and to compress the locking member 41 formed by the upper seal 27A. The locking member 41 has to be pushed over the projection 10. This intermediate position in which the locking member 41 is compressed more than in the fully mated position F and in the pre-locking position P is not depicted in detail.

In Fig. 11, a third step of the insertion process and the final position of the contact stud 1 in the terminal 20, that means the fully mated position F of the terminal 20 and the contact stud 1, is shown. The locking member 41 now locks the terminal 20 to the contact stud 1. A positive fit between the terminal 20 and the contact stud 1 is created by the locking member 41. In order to move the terminal 20 and the contact stud 1 out of the fully mated position F, it is necessary to apply a force for deforming the locking member 41.

The first section 11 of the contact stud 1 and the contact surface 21 of the terminal 20 are at the same height along the insertion direction 5 or a height direction 23 parallel to the insertion direction in this fully mated position.

The first section 11 of the contact stud 1 is now in electrical contact with the contact surface 21 of the terminal 20. A grounding of the cable attached to the terminal 20 to the car body C is now possible via the first section 11 and the contact surfaces 21.

Further, the upper seal 27A is now located behind the projection 10 that is embodied as a rim 14. The projection 10 thus serves as a latch 13 for fixing the contact stud 1 relative to the contact terminal 20. This is possible due to a positive fit-like connection of the terminal 22 and the contact stud 1 via the upper seal 27A.

The protection element 2 in the form of a ring 9 is located at its final position. In this final position, it can also serve as a positioning element for positioning, in particular for centering the contact 1 relative to the terminal 20.

The upper seal 27, 27A and the second seal 27 at the lower end now seal a contact space 28 in which the contact surfaces 21 and the first section 11 are located.

A detection projection 17 protrudes in an insertion direction 5 from a front part of the contact stud 1. It protrudes out of the terminal 20 and can be used for detecting the correct positioning of the contact stud 1 in the terminal 20 for example by a machine or by a human operator.

The contact stud 1 and the terminal 20 are rotatable to each other around a rotation axis that is parallel to the insertion direction 5.

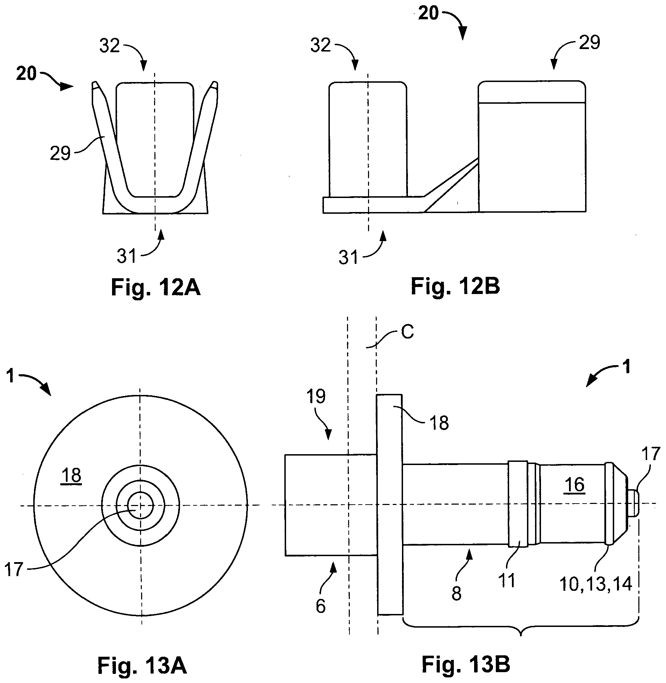

In figures 12A and 12B, further side views of the terminal 20 are shown.

In figures 13A and 13B, further side views of the contact stud 16 are shown. In Fig. 13B, the car body C is again shown attached to the contact stud 1.

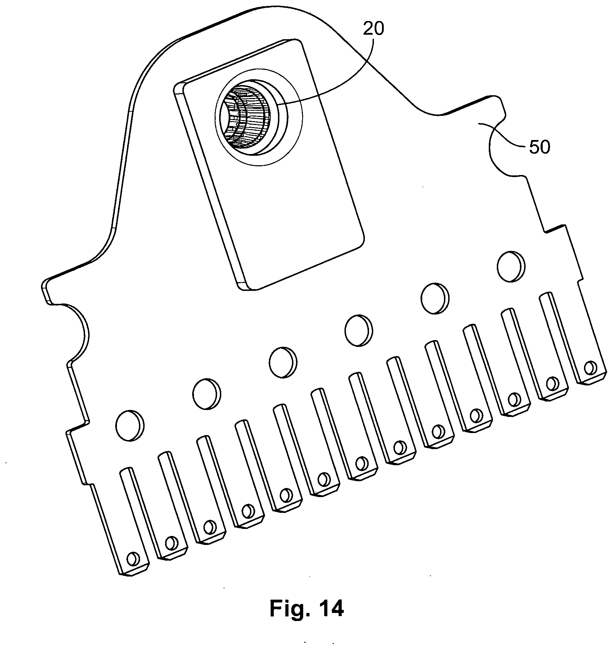

In Fig. 14, a further embodiment of a terminal 20 is shown. This terminal 20 is attached to a joint connector 50 that allows the connection of small wires.

The contact stud 1 of Figs. 1 to 13B can also be used together with the terminal 20 of Fig. 14. The contact stud 1 can have a standardized shape that can be used with a variety of different terminals 20.

### Reference Signs

- 1: contact stud
- 2: protection element
- 3: connection section
- 5: insertion direction
- 6: base section
- 7: coating
- 8: part of the contact stud
- 9: ring
- 10: projection
- 11: first section
- 12: intermediate section
- 13: latch
- 14: rim
- 15: direction perpendicular to the insertion direction
- 16: channel
- 17: detection projection
- 18: flange
- 19: deformation section
- 20: terminal
- 21: contact surface
- 22: receptacle
- 23: height direction
- 24: contact spring
- 25: projection element
- 26: metal ring
- 27: seal
- 20A: upper seal
- 28: contact space
- 29: crimping section
- 30: flange
- 31: opening
- 32: second opening
- 33: channel
- 34: recess
- 35: transition section
- 36: positioning section
- 40: contact assembly
- 41: locking member
- 50: joint connector

- C: car body
- F: fully mated position
- P: pre-locking position

## Claims

1. Contact stud (1) for providing a connection, in particular a ground connection to a car body (C), comprising a protection element (2), a connection section (3) adapted to be inserted into a terminal (20) along an insertion direction (5) and a base section (6) adapted to be mounted on a car body (C) wherein an electrically conductive first section (11) of the connection section (3) is protected from being coated by a coating (7) by the protection element (2)
**characterized in that**
the connection section (3) outside the electrically conductive first section (11) is coated with an insulator, wherein the protection element (2) is shiftable along the insertion direction (5).

2. Contact stud (1) according to claim 1, wherein the electrically conductive first section (11) is located on a part (8) of the contact stud (1) that has a constant cross section along the insertion direction (5) and the protection element (2) is a ring (9) that is adapted to the cross section of the part (8) and wherein the ring (9) is movable along the part (8).

3. Contact stud (1) according to one of claims 1 to 2, wherein the contact stud (1) comprises a projection (10) projecting perpendicular to the insertion direction (5).

4. Contact assembly (40) in particular for car technology comprising a contact stud (1) according to one of claims 1 to 3 and a terminal (20) adapted to receive the contact stud (1) in an insertion direction (5), comprising a receptacle (22) with an opening (31) that is open in the insertion direction (5) and a contact spring (24) in the receptacle (22), the contact spring (24) comprising a contact surface (21) protruding inwardly into the receptacle (22).

5. Contact assembly (40) according to claim 4, wherein the terminal (20) comprises more than one contact surface (21), the contact surfaces (21) being located cylindrically around the insertion direction (5).

6. Contact assembly (40) according to claim 4 or 5, wherein the terminal (20) comprises a projection (10) element (25) that protrudes into the receptacle (22) and that is located between the opening (31) and the contact spring (24).

7. Contact assembly (40) according to one of claims 4 to 6, wherein the terminal (20) comprises a second opening (32) opposite the first opening (31) that is adapted for detecting the presence of the contact stud (1) in the receptacle (22).

8. Contact assembly (40) according to one of claims 4 to 7, wherein the electrically conductive first section (11) of the contact stud (1) and the contact surface (21) of the terminal (20) are at the same height along the insertion direction (5) in a fully mated position.

9. Contact assembly (40) according to one of claims 4 to 8, wherein the contact assembly (40) comprises a locking member (41) for locking the contact stud (1) to the terminal (20) at least in a fully mated position (F).

10. Contact assembly (40) according to claim 9, wherein the locking member (41) is less compressed in the fully mated position (F) than in an intermediate position.

11. Contact assembly (40) according to claim 9 or 10, wherein the locking member (41) is a sealing ring (27) of the terminal (20).

12. Contact assembly (40) according to one of claims 4 to 11, wherein the contact stud (1) and the terminal (20) are rotatable to each other around a rotation axis that is parallel to the insertion direction (5).

## Patentansprüche

1. Kontaktbolzen (1) zum Herstellen einer Verbindung, insbesondere einer Masseverbindung zu einer Fahrzeugkarosserie (C), der ein Schutzelement (2), einen Verbindungsabschnitt (3), der zum Einführen in einen Anschluss (20) in einer Einführrichtung (5) eingerichtet ist, sowie einen Sockelabschnitt (6) umfasst, der zum Anbringen an einer Fahrzeugkarosserie (C) eingerichtet ist, wobei ein elektrisch leitender erster Abschnitt (11) des Verbindungsabschnitts (3) durch das Schutzelement (2) davor geschützt ist, mit einer Beschichtung (7) beschichtet zu werden, **dadurch gekennzeichnet, dass** der Verbindungsabschnitt (3) außerhalb des elektrisch leitenden ersten Abschnitts (11) mit einem Isolator beschichtet ist, wobei das Schutzelement (2) in der Einführrichtung (5) verschoben werden kann.

2. Kontaktbolzen (1) nach Anspruch 1, wobei sich der elektrisch leitende erste Abschnitt (11) an einem Teil (8) des Kontaktbolzens (1) befindet, der einen konstanten Querschnitt in der Einführrichtung (5) hat, und das Schutzelement (2) ein Ring (9) ist, der an den Querschnitt des Teils (8) angepasst ist, und der Ring (9) an dem Teil (8) entlang bewegt werden kann.

3. Kontaktbolzen (1) nach einem der Ansprüche 1 bis 2, wobei der Kontaktbolzen (1) einen Vorsprung (10) umfasst, der senkrecht zu der Einführrichtung (5) vorsteht.

4. Kontaktbaugruppe (40) insbesondere für Automobiltechnik, die einen Kontaktbolzen (1) nach einem der Ansprüche 1 bis 3 und einen Anschluss (20) umfasst, der zum Aufnehmen des Kontaktbolzens (1) in einer Einführrichtung (5) eingerichtet ist, eine Aufnahme (22) mit einer Öffnung (31), die in der Einführrichtung (5) offen ist, sowie eine Kontaktfeder (24) in der Aufnahme (22) umfasst, wobei die Kontaktfeder (24) eine Kontaktfläche (21) umfasst, die nach innen in die Aufnahme (22) hinein vorsteht.

5. Kontaktbaugruppe (40) nach Anspruch 4, wobei der Anschluss (20) mehr als eine Kontaktfläche (21) umfasst und die Kontaktflächen (21) zylindrisch um die Einführrichtung (5) herum angeordnet sind.

6. Kontaktbaugruppe (40) nach Anspruch 4 oder 5, wobei der Anschluss (20) ein Element (25) mit Vorsprung (10) umfasst, das in die Aufnahme (22) hinein vorsteht und das sich zwischen der Öffnung (31) und der Kontaktfeder (24) befindet.

7. Kontaktbaugruppe (40) nach einem der Ansprüche 4 bis 6, wobei der Anschluss (20) eine zweite Öffnung (32) gegenüber der ersten Öffnung (31) umfasst, die so eingerichtet ist, dass sie das Vorhandensein des Kontaktbolzens (1) in der Aufnahme (22) erfasst.

8. Kontaktbaugruppe (40) nach einem der Ansprüche 4 bis 7, wobei der elektrisch leitende erste Abschnitt (11) des Kontaktbolzens (1) und die Kontaktfläche (21) des Anschlusses (20) in einer vollständig in Eingriff befindlichen Position in der Einführrichtung (5) auf der gleichen Höhe liegen.

9. Kontaktbaugruppe (40) nach einem der Ansprüche 4 bis 8, wobei die Kontaktbaugruppe (40) ein Arretierelement (41) umfasst, mit dem der Kontaktbolzen (1) wenigstens in einer vollständig in Eingriff befindlichen Position (F) an dem Anschluss (20) arretiert wird.

10. Kontaktbaugruppe (40) nach Anspruch 9, wobei das Arretierelement (41) in der vollständig in Eingriff befindlichen Position (F) weniger zusammengedrückt wird als in einer Zwischenposition.

11. Kontaktbaugruppe (40) nach Anspruch 9 oder 10, wobei das Arretierelement (41) ein Dichtungsring (27) des Anschlusses (20) ist.

12. Kontaktbaugruppe (40) nach einem der Ansprüche 4 bis 11, wobei der Kontaktbolzen (1) und der Anschluss (20) zueinander um eine Drehachse herum gedreht werden können, die parallel zu der Einführrichtung (5) ist.

## Revendications

1. Plot de contact (1) pour établir une connexion, en particulier une connexion à la terre avec une carrosserie de voiture (C), comprenant un élément de protection (2), une section de connexion (3) conçue pour être insérée dans une borne (20) le long d'une direction d'insertion (5) et une section de base (6) conçue pour être montée sur une carrosserie de voiture (C), dans lequel la première section électriquement conductrice (11) de la section de connexion (3) est protégée contre un revêtement (7) par l'élément de protection (2)
**caractérisé en ce que** la section de connexion (3) à l'extérieur de la première section électriquement conductrice (11) est revêtue d'un isolant, l'élément de protection (2) étant déplaçable dans la direction d'insertion (5).

2. Plot de contact (1) selon la revendication 1, dans lequel la première section électriquement conductrice (11) est située sur une partie (8) du plot de contact (1) qui a une section transversale constante le long de la direction d'insertion (5) et l'élément de protection (2) est une bague (9) qui est conçue à la section transversale de la partie (8) et dans lequel la bague (9) est mobile le long de la partie (8).

3. Plot de contact (1) selon l'une des revendications 1 à 2, dans lequel le plot de contact (1) comprend une saillie (10) faisant saillie perpendiculairement à la direction d'insertion (5).

4. Ensemble de contact (40), en particulier pour la technique automobile, comprenant un plot de contact (1) selon l'une des revendications 1 à 3 et une borne (20) conçue pour recevoir le plot de contact (1) dans une direction d'insertion (5), comprenant un réceptacle (22) avec une ouverture (31) qui est ouverte dans la direction d'insertion (5) et un ressort de contact (24) dans le réceptacle (22), le ressort de contact (24) comprenant une surface de contact (21) faisant saillie vers l'intérieur dans le réceptacle (22).

5. Ensemble de contact (40) selon la revendication 4, dans lequel la borne (20) comprend plus d'une surface de contact (21), les surfaces de contact (21) étant situées de manière cylindrique autour de la direction d'insertion (5).

6. Ensemble de contact (40) selon les revendications 4 ou 5, dans lequel la borne (20) comprend un élément (25) en saillie (10) qui fait saillie dans le réceptacle (22) et qui est situé entre l'ouverture (31) et le ressort de contact (24).

7. Ensemble de contact (40) selon l'une des revendications 4 à 6, dans lequel la borne (20) comprend une deuxième ouverture (32) opposée à la première ouverture (31) qui est conçue pour détecter la présence du plot de contact (1) dans le réceptacle (22).

8. Ensemble de contact (40) selon l'une des revendications 4 à 7, dans lequel la première section électriquement conductrice (11) du plot de contact (1) et la surface de contact (21) de la borne (20) sont à la même hauteur le long de la direction d'insertion (5) dans une position complètement accouplée.

9. Ensemble de contact (40) selon l'une des revendications 4 à 8, dans lequel l'ensemble de contact (40) comprend un élément de verrouillage (41) pour verrouiller le plot de contact (1) à la borne (20) au moins dans une position complètement accouplée (F).

10. Ensemble de contact (40) selon la revendication 9, dans lequel l'élément de verrouillage (41) est moins comprimé dans la position complètement accouplée (F) que dans une position intermédiaire.

11. Ensemble de contact (40) selon les revendications 9 ou 10, dans lequel l'élément de verrouillage (41) est une bague d'étanchéité (27) de la borne (20).

12. Ensemble de contact (40) selon l'une des revendications 4 à 11, dans lequel le plot de contact (1) et la borne (20) peuvent tourner l'un par rapport à l'autre autour d'un axe de rotation qui est parallèle à la direction d'insertion (5).
